# EUROPÄISCHE PATENTSCHRIFT

(11) **EP 1 110 170 B1**
(45) Veröffentlichungstag und Bekanntmachung des Hinweises auf die Patenterteilung: **10.05.2006**
(21) Anmeldenummer: 99953643.6
(22) Anmeldetag: 01.09.1999
(51) Int. Cl.: G06K 9/60

(54) **VERFAHREN UND VORRICHTUNG ZUR KAPAZITIVEN BILDERFASSUNG**
METHOD AND DEVICE FOR CAPACITIVELY ACQUIRING IMAGES
PROCEDE ET DISPOSITIF D'ACQUISITION D'IMAGES PAR VOIE CAPACITIVE

(30) Priorität: 08.09.1998 DE 19841001
(43) Veröffentlichungstag der Anmeldung: 27.06.2001
(73) Patentinhaber: Infineon Technologies AG, 81669 München (DE)
(72) Erfinder: JUNG, Stefan, D-80469 München (DE)
(74) Vertreter: Epping - Hermann - Fischer
(86) Internationale Anmeldenummer: PCT/DE1999/002727
(87) Internationale Veröffentlichungsnummer: WO 2000/014675

(56) Entgegenhaltungen:
- EP-A- 0 786 745
- WO-A-98/52146
- US-A- 4 162 481

## Beschreibung

Die vorliegende Erfindung betrifft ein Verfahren und eine Vorrichtung zur kapazitiven Bilderfassung, die insbesondere zur Erfassung von Schwarzweißbildern von Fingerabdrücken geeignet sind.

Zur Realisierung von kapazitiven Sensormatrizen für die Aufnahme von Fingerabdruckbildern sind verschiedene Verfahren bekannt. In der Veröffentlichung von S. Jung e.a.:" A Low-Power and High-Performance CMOS Fingerprint Sensing and Encoding Architecture" in ESSCIRC'98 sind ein Fingerabdrucksensor und zugehöriges Meßverfahren beschrieben, das eine kapazitive Erfassung des Fingerabdrucks ermöglicht. Die effektive Kapazität zwischen der Fingeroberfläche und einer oberen Elektrode wird für jeden Bildpunkt (Pixel) erfaßt. Unterhalb der oberen Elektroden befinden sich außer den elektrischen Zuleitungen jeweils Koppelelektroden, die von den oberen Elektroden elektrisch isoliert sind und mit diesen Elektroden weitere Kapazitäten bilden. Es ist eine elektronische Schaltung vorgesehen, die es ermöglicht, die jeweilige Koppelelektrode auf ein vorgesehenes Potential zu laden und über einen Schalter die obere Meßelektrode auf ein anderes Potential aufzuladen. Nachdem der Schalter geöffnet wird, stellen sich bestimmte Ladungs- und Spannungsverhältnisse auf der Anordnung ein, die erfaßt werden können und der Ermittlung der jeweiligen Kapazität an dem betreffenden Bildpunkt dienen. Um mit diesem Verfahren zu einem den Fingerabdruck repräsentierenden Bild mit ausreichender Bildqualität zu gelangen, ist immer eine Kalibrierung des Sensors oder zumindest eine Zuführung einer externen Referenz notwendig. Diese Referenzwerte sind notwendig, um aus den kontinuierlichen Sensordaten (d.h. die durch das Sensorschema erhaltenen Spannungswerte, die den Kapazitätswerten zwischen Finger- und Sensoroberfläche entsprechen) ein für die Weiterverarbeitung geeignetes, d.h. diskretisiertes Bild zu erhalten. Bei einer vorgesehenen Aufnahme eines Schwarzweißbildes kann es zu sehr schlechten Ergebnissen kommen, wenn bereichsweise das Bild schwarz oder weiß wird, weil sich in Folge einer verschobenen Referenz ein unzureichender Kontrast ergibt. Das ist praktisch nicht zu vermeiden, da entweder die Sensorwerte oder aber die Werte der elektrischen Parameter, welche für die aus den Kapazitätswerten ermittelten Spannungswerten führen, lokal variieren können. Diese Schwierigkeit läßt sich in sehr aufwendiger Weise dadurch umgehen, daß ein mehrstufig diskretisiertes Bild abgespeichert und weiterverarbeitet wird.

Aus EP-A-0786745 ist ein Verfahren und eine Vorrichtung zur kapazitiven Bilderfassung bekannt. Dabei ist eine Erhaltung für die Ermittlung eines örtlichen Mittelwertes vorgesehen, die getrennt von der Bilderfassungsvorrichtung angeordnet ist.

Aufgabe der vorliegenden Erfindung ist es, ein Verfahren und eine Vorrichtung zur kapazitiven Bilderfassung anzugeben, mit denen es auf einfache Weise möglich ist, ein gerastertes Schwarzweißbild mit einem für die Detailwiedergabe ausreichenden Kontrast, insbesondere zur Reproduktion von Fingerabdrücken, aufzunehmen.

Diese Aufgabe wird mit dem Verfahren mit den Merkmalen des Anspruches 1 bzw. mit der Vorrichtung mit den Merkmalen des Anspruches 5 gelöst. Ausgestaltungen ergeben sich aus den abhängigen Ansprüchen.

Das erfindungsgemäße Verfahren kommt mit einer einstufigen binären Analog-Digital-Wandlung der erfaßten Meßsignale aus. Um örtlich wechselnde Helligkeits- oder Kontrastunterschiede auszugleichen, werden die zu jedem Bildpunkt erfaßten kapazitiven Meßwerte einem lokalen Schwellwertvergleich unterzogen. Auf diese Weise wird eine Referenz gegeben, die es als Grenzwert gestattet, ein einstufiges digitales Ergebnis (binäre 0 oder 1) einem Meßwert zuzuordnen. Die kapazitiv messende Erfassung des Bildes und die Ermittlung des Schwellwertes, der sich aus den Gegebenheiten eines jeweils begrenzten Ausschnittes aus dem Bild ergibt, können bei diesem Verfahren gleichzeitig parallel durchgeführt werden. Eine Vorrichtung, mit der dieses Verfahren ausgeführt werden kann, arbeitet unabhängig von externen Referenzwerten und kann z. B. zur Erfassung von Fingerabdrücken auf einem Halbleiterchip integriert sein.

Zur kapazitiven Erfassung des Bildes wird im Prinzip wie in der eingangs angegebenen Veröffentlichung beschrieben verfahren. Man verwendet eine rasterförmige Anordnung von elektrischen Leitern, die Gegenelektroden zu der Oberfläche des Bildes bilden. Die Oberfläche des Bildes kann z. B. die Hautoberfläche einer Fingerbeere sein. Durch die Strukturierung der Hautoberfläche in Stege und Furchen ergeben sich so örtlich verschiedene Kapazitäten zwischen den in einer Ebene als Meßelektroden angeordneten elektrischen Leitern und der als auf konstantem elektrischem Potential liegend angenommenen Hautoberfläche. In einem größeren Abstand von der Bildoberfläche sind weitere Elektroden in einer zu den erstgenannten Elektroden parallelen Ebene als Koppelelektroden angeordnet. Durch Anlegen geeigneter Potentiale und Abschalten des betreffenden Potentiales von den Elektroden, die in dichterem Abstand zur Bildoberfläche angeordnet sind, kann die Kapazität zwischen einer jeweiligen solchen Meßelektrode und der Bildoberseite an dem jeweils betreffenden Bildpunkt gemessen werden.

Bei dem erfindungsgemäßen Verfahren werden zur Messung zusätzlich weitere Elektroden als Referenzelektroden verwendet, die jeweils benachbart zu den eigentlichen Meßelektroden angeordnet werden. Die Referenzelektroden sind so angeordnet und dimensioniert, daß damit im Prinzip die gleiche Messung durchgeführt werden kann wie mit den eigentlichen Meßelektroden. Die Referenzelektroden sind aber durch die Anordnung und gegebenenfalls die geometrische Form so stark mit anderen Referenzelektroden, zumindest den unmittelbar benachbarten, kapazitiv verkoppelt, daß bei einer Messung mit diesen Elektroden jeweils über einen gewissen Bereich des Bildes um einen Bildpunkt herum gemittelt wird. Der mit den Referenzelektroden erfaßte Mittelwert wird als Schwellwert oder Grenzwert herangezogen, mit dem der jeweilige Meßwert, der aus der kapazitiven Messung mittels der eigentlichen Meßelektroden stammt, verglichen wird. Mit den Mittelwerten erhält man so statt einer über die gesamte Bildfläche konstanten Referenz einen örtlich variierenden Vergleichswert, der auch bei einem lokal sehr hellen oder sehr dunklen Bild einen für die Detailwiedergabe ausreichenden Kontrast liefert.

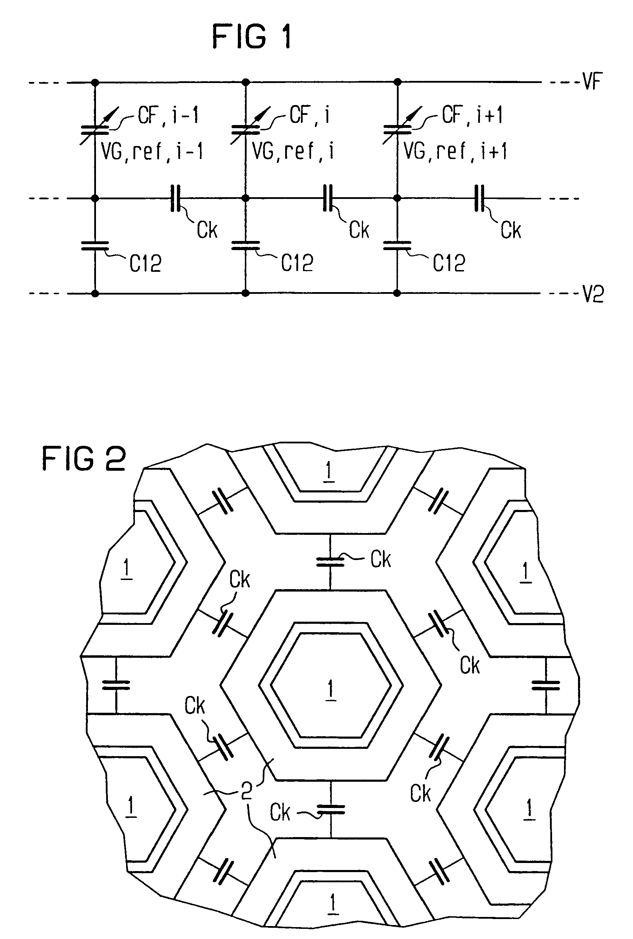

Die bei der Messung an die Meßelektroden angelegte elektrische Spannung kann von der an die Referenzelektroden angelegten Spannung verschieden sein. In Figur 1 ist ein prinzipielles Schaltbild für eine für das Verfahren geeignete Anordnung dargestellt. Zwischen den beiden Schichtlagen elektrischer Leiter (Meßelektroden und Koppelelektroden) sind in jedem Bildpunkt die Kapazitäten C12 vorhanden. Die Koppelelektroden werden auf das elektrische Potential V2 gelegt. Die Bildoberseite, z. B. die Hautoberfläche des Fingers, wird als auf konstantem Potential VF liegend angenommen. An die Meßelektroden wird ein bestimmtes Potential angelegt und durch Betätigen von Schaltern von den Elektroden getrennt. Entsprechend den jeweiligen Kapazitätsrelationen an den einzelnen Bildpunkten stellen sich unterschiedliche Werte für die Größe der Ladung auf den Elektroden ein, die zur Bestimmung der jeweiligen Kapazitäten zwischen der Meßelektrode und der Bildoberseite gemessen werden. Im Fall der Messung mittels der Referenzelektroden sind die zwischen den Elektroden vorhandenen Kapazitäten zu berücksichtigen, da diese Referenzelektroden so angeordnet und gestaltet sind, daß die in Figur 1 eingezeichneten Koppelkapazitäten Ck nicht vernachlässigbare Werte besitzen. Nach dem Abschalten der auf die Referenzelektroden gelegten Spannung, die gleich oder verschieden sein kann von der für die eigentliche Messung an die Meßelektroden angelegte Spannung, stellt sich auf den Referenzelektroden in jedem Bildpunkt jeweils ein der Elektroden-Bildpunkt-Kapazität CF, i entsprechender Wert VG, ref, i ein. Die derart durchgeführte kapazitive Messung liefert ein sozusagen verschmiertes oder verwaschenes Abbild des zu erfassenden Bildes. Die durch die kapazitive Kopplung zwischen den Referenzelektroden hervorgerufene Unschärfe in der kapazitiven Messung wird ausgenutzt, um den lokalen Wert dieser Messung als Referenz (Bezugswert) in einem Vergleich mit den über die Meßelektroden bestimmten Wert heranzuziehen.

Das in Figur 1 dargestellte Prinzipschaltbild für die mittelnde kapazitive Messung des erfindungsgemäßen Verfahrens wird ergänzt durch
in den Figuren 2 und 3 dargestellte Schemata für eine für das Verfahren geeignete Elektrodenanordnung, die auch in der zugehörigen Vorrichtung in dieser Weise realisiert sein kann, sowie durch die in
Figur 4 dargestellten Diagramme zur Erläuterung der erfindungsgemäßen Verbesserung der Bildqualität.

Figur 2 zeigt als Beispiel einen Ausschnitt aus einer rasterförmigen Anordnung von auf einem hexagonalen Raster angeordneten sechseckigen Meßelektroden 1, die jeweils ringförmig von durch konzentrische Sechsecke berandete Referenzelektroden 2 umgeben sind. Die Koppelkapazitäten Ck zwischen zwei jeweiligen Referenzelektroden sind in dem Schema als kleine Kondensatoren angedeutet. Diese Kondensatoren sind nicht wirklich vorhanden, sondern stellen nur ein Ersatzschaltbild für die durch die Referenzelektroden 2 real gebildeten Kapazitäten dar.

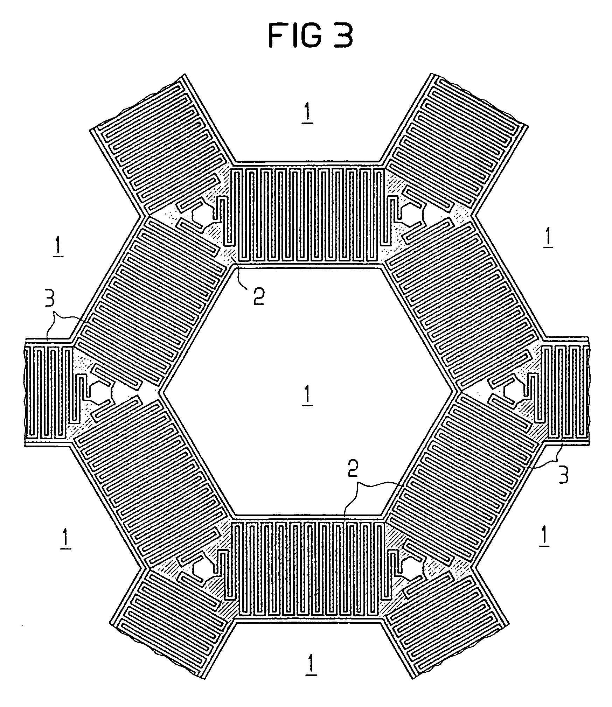

Figur 3 zeigt eine der Figur 2 entsprechende Ansicht, in der die Struktur der Referenzelektroden 2 in einem Ausführungsbeispiel genauer angegeben ist. Die Referenzelektroden 2 sind hier kammartig ausgebildet und so miteinander verzahnt, daß die Koppelkapazitäten zwischen den Referenzelektroden zweier benachbarter Bildpunkte möglichst groß sind. Die Referenzelektroden 2 bilden auf diese Weise mit den einem benachbarten Bildpunkt zugeordneten Referenzelektroden 3 Kondensatoren einer möglichst großen Kapazität. So wird bei der Ausführung des Verfahrens mittels dieser Anordnung eine möglichst gute Mittelwertbildung erreicht. Die durch die Bildstruktur gegebenen Schwankungen im Meßwert von Bildpunkt zu Bildpunkt werden damit weitgehend ausgeglichen, und es wird im wesentlichen nur ein über mehrere Bildpunkte erfaßter Mittelwert gemessen.

Bei diesem Verfahren wird daher die lokale Bildinformation, die mit den Meßelektroden erfaßt wird, in der parallelen Messung über die Referenzelektroden durch ihren lokalen Mittelwert ersetzt. Der Radius des Bereiches, über den gemittelt wird, und die Gewichtungen der lokalen Mittelung je nach der Position in dem Gesamtbild können durch die Verhältnisse der Kapazitäten Ck und C12 eingestellt werden. Die Grenzfälle sind dabei Ck = 0, womit sich ein Bild ergeben sollte, das im wesentlichen dem von den Meßelektroden erfaßten Bild entspricht, und Ck unendlich groß, so daß sich auf jeder Referenzelektrode das gleiche Potential ausbildet, welches dem globalen Mittelwert des gesamten Bildes entspricht. Die Kapazitätsverhältnisse sind an die jeweilige Anwendung anzupassen und z.B. bei der Verwendung des Verfahrens in einem Fingerabdrucksensor so zu wählen, daß der Mittelwert über einen Bereich ermittelt wird, dessen Radius, vorzugsweise örtlich verschieden, an die typische Rillenstruktur eines Fingerabdruckes angepaßt wird.

Die Anordnung der Meßelektroden und Referenzelektroden ist vorzugsweise für jeden Bildpunkt gleichartig zu wählen. Es sind vorzugsweise gleichartige elektronische Schaltungen vorhanden, mit denen an die Elektroden in jedem Bildpunkt die vorgegebenen Potentiale angelegt und abgeschaltet werden können. Die sich in jedem Bildpunkt bildenden Potentiale auf den Meßelektroden bzw. Referenzelektroden werden vorzugsweise mit einer Komparatorschaltung verglichen. Aus diesem Vergleich resultiert ein schwarzer oder weißer Bildpunkt eines Schwarzweißbildes, je nachdem ob der Meßwert unter oder über dem betreffenden Mittelwert liegt. Die Komparatorschaltung kann z. B. als ein dynamisches Latch ausgeführt sein.

Die Vorrichtung läßt sich als integrierte Schaltung realisieren, wozu sich die als Beispiel angegebene hexagonale Anordnung der Meßelektroden besonders eignet. Wegen der dichten Anordnung der Meßelektroden in einem solchen Raster mit jeweils aneinander angrenzenden Seiten der Sechsecke lassen sich die Referenzelektroden dort besonders gut zur Ausbildung einer möglichst großen Koppelkapazität anordnen.

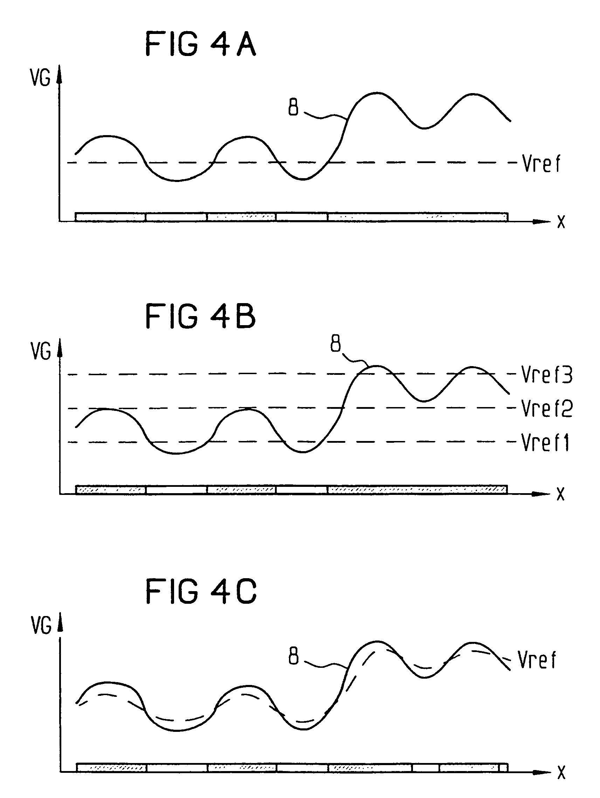

Figur 4 zeigt drei Diagramme anhand derer das erfindungsgemäße Verfahren verdeutlicht wird. Eine mit x bezeichnete Ausdehnung in einer Richtung der ebenen Anordnung von Meßelektroden ist in beliebiger Einheit auf der Abszisse abgetragen; Spannungswerte, die zu den gemessenen Kapazitäten der einzelnen Bildpunkte gehören, sind als VG auf der Ordinate abgetragen. Die eingezeichnete Kurve 8 soll die sich in x-Richtung ändernde Spannung VG repräsentieren. Je nachdem ob der Spannungswert VG größer oder kleiner als eine Bezugsspannung Vref ist, wird der betreffende Bildpunkt als schwarz oder weiß repräsentiert. Aus der Figur 4a ist erkennbar, daß bei Verwendung nur einer Bezugsspannung Vref in dem rechten Bereich des Diagrammes die Spannung VG stets oberhalb der Bezugsspannung bleibt, so daß das Bild dort gleichmäßig schwarz dargestellt wird. Die Spannungsschwankungen (Berge und Täler der Kurve 8) werden nicht mehr berücksichtigt, so daß eine Detailauflösung des Bildes an dieser Stelle nicht möglich ist. Eine genauere Wiedergabe des Bildes mit Grauabstufungen ist möglich, wenn entsprechend Figur 4b verschiedene Bezugsspannungen Vref1, Vref2, Vref3 zur Erzeugung eines in den Grauwerten abgestuften Bildes verwendet werden. Eine derartige Auswertung der Meßergebnisse ist aber mit hohem Aufwand verbunden. Erfindungsgemäß wird daher entsprechend der Darstellung von Figur 4c verfahren, in dem die durch die gestrichelte Linie dargestellte Bezugsspannung Vref durch die Mittelwertbildung örtlich an die Gegebenheiten des Bildes angepaßt werden und so auch in dem rechts eingezeichneten Bereich die Schwankungen der Spannung VG zu Helligkeitswerten, d.h. einer Schwarzweißabstufung, des Bildes herangezogen werden können. Die Ermittlung dieser Bezugsspannung Vref erfolgt in der beschriebenen Weise durch Mittelwertbildung unter Verwendung der kapazitiv gekoppelten Referenzelektroden.

## Patentansprüche

1. Verfahren zur kapazitiven Bilderfassung, bei dem ein Bild mittels einer Vielzahl von in einem Raster angeordneten Elektroden durch eine Messung der elektrischen Kapazität zwischen je einer Elektrode und einem Bildpunkt erfaßt wird,
bei dem mittels weiterer in diesem Raster angeordneter Elektroden, die miteinander kapazitiv verkoppelt sind, in jeweils begrenzten Bereichen des Bildes ein örtlicher Mittelwert einer entsprechenden Messung der elektrischen Kapazitäten erfaßt wird und
bei dem dieser Mittelwert als Referenzwert für die gemessene elektrische Kapazität an mindestens einem Bildpunkt innerhalb des betreffenden Bereiches verwendet wird.

2. Verfahren nach Anspruch 1
bei dem die Abmessungen der Bereiche, in denen jeweils ein Mittelwert erfaßt wird, innerhalb des Bildes verändert werden.

3. Verfahren nach Anspruch 1 oder 2,
bei dem die Mittelwerte jeweils als Grenzwerte verwendet werden und durch Vergleich einer gemessenen Kapazität mit dem jeweiligen Grenzwert jedem Bildpunkt einer von zwei möglichen Werten zugeordnet wird.

4. Verfahren nach Anspruch 3,
mit dem ein Schwarzweißbild eines Fingerabdruckes erfaßt wird.

5. Vorrichtung zur kapazitiven Erfassung eines Bildes aus Bildpunkten in einem Raster, bei der vorhanden sind:
eine Oberfläche zur Anordnung eines zu erfassenden Bildes, zwei zu dieser Oberfläche in verschiedenen Abständen angeordnete Schichten entsprechend dem Raster unterteilter und gegeneinander isolierter elektrischer Leiter als Meßelektroden, in der in geringerem Abstand zu der Oberfläche angeordneten Schicht weitere elektrische Leiter als Referenzelektroden, die entsprechend dem Raster benachbart zu den Meßelektroden so angeordnet und innerhalb vorgegebener Bereiche derart kapazitiv verkoppelt sind, daß um jeden Bildpunkt mittels der Referenzelektroden eine örtlich gemittelte kapazitive Messung vorgenommen werden kann, und
bei der elektronische Schaltungen vorhanden sind, mit denen zum Zweck der vorgesehenen Messung die Meßelektroden und die Referenzelektroden in gleichartiger Weise mit elektrischen Potentialen beaufschlagt werden können und die jeweils zwischen einem Bildpunkt und einer Elektrode vorhandenen Kapazitäten ermittelt werden können.

6. Vorrichtung nach Anspruch 5,
bei der die Referenzelektroden kammartige Strukturen aufweisen, die mit kammartigen Strukturen benachbarter Referenzelektroden verzahnt sind.

## Claims

1. Method for capacitive image acquisition,
in which an image is acquired using a multiplicity of electrodes arranged in a grid, by measurement of the electrical capacitance between a respective electrode and a pixel,
in which, using further electrodes which are arranged in said grid and are capacitively coupled to one another, a local average value of a corresponding measurement of the electrical capacitances is acquired in respectively delimited areas of the image, and
in which said average value is used as a reference value for the measured electrical capacitance at at least one pixel within the relevant area.

2. Method according to Claim 1,
in which the dimensions of the areas in which a respective average value is acquired are altered within the image.

3. Method according to Claim 1 or 2,
in which the average values are in each case used as limit values and, by comparison of a measured capacitance with the respective limit value, each pixel is assigned one of two possible values.

4. Method according to Claim 3,
using which a black-and-white image of a fingerprint is acquired.

5. Device for capacitive acquisition of an image comprising pixels in a grid, in which the following are present:
a surface for arranging an image to be acquired,
two layers - arranged at different distances from said surface - of electrical conductors as measuring electrodes, said electrical conductors being subdivided in accordance with the grid and mutually insulated,
in the layer arranged at a shorter distance from the surface, further electrical conductors as reference electrodes which are arranged adjacent to the measuring electrodes in accordance with the grid, and are capacitively coupled within predetermined areas, in such a way that a locally averaged capacitive measurement can be performed around each pixel using the reference electrodes, and
in which electronic circuits are present, by means of which electrical potentials can be applied to the measuring electrodes and the reference electrodes in an identical manner for the purpose of the intended measurement and the capacitances respectively present between a pixel and an electrode can be determined.

6. Device according to Claim 5,
in which the reference electrodes have comb-like structures which are intermeshed with comb-like structures of adjacent reference electrodes.

## Revendications

1. Procédé d'acquisition d'images par voie capacitive,
dans lequel on acquiert une image au moyen d'une pluralité d'électrodes disposées suivant une trame par une mesure de la capacité électrique entre respectivement une électrode et un point image,
dans lequel on acquiert, au moyen d'autres électrodes disposées dans cette trame et couplées capacitivement entre elles, dans des zones limitées respectives de l'image, une valeur moyenne locale d'une mesure correspondante des capacités électriques et
dans lequel on utilise cette valeur moyenne comme valeur de référence pour la capacité électrique mesurée sur au moins un point image dans la zone concernée.

2. Procédé suivant la revendication 1,
dans lequel on modifie à l'intérieur des images les dimensions des zones dans lesquelles on acquiert respectivement une valeur moyenne.

3. Procédé suivant la revendication 1 ou 2,
dans lequel on utilise les valeurs moyennes respectivement comme valeurs limites et, par comparaison d'une capacité mesurée à la valeur limite respective, on associe à chaque point image l'une de deux valeurs possibles.

4. Procédé suivant la revendication 3,
par lequel on acquiert une image en noir et blanc d'une empreinte digitale.

5. Dispositif d'acquisition par voie capacitive d'une image constituée de points image dans une trame, dans lequel il y a :
une surface pour disposer une image à acquérir, deux conducteurs électriques, en tant qu'électrodes de mesure, isolés électriquement l'un de l'autre et subdivisées suivant la trame en des couches disposées à des distances différentes de cette surface,
dans la couche disposée à la distance la plus petite de la surface, il est disposé d'autres conducteurs électriques en tant qu'électrodes de référence, qui sont disposées conformément à la trame en étant voisines des électrodes de mesure et qui sont couplées capacitivement dans des zones prescrites, de façon à pouvoir effectuer autour de chaque point image, au moyen des électrodes de référence, une mesure capacitive sous forme de moyenne locale, et
dans lequel il y a des circuits électroniques par lesquels, aux fins de la mesure prévue, les électrodes de mesure et les électrodes de référence peuvent être alimentées de la même façon en des potentiels électriques et les capacités présentes respectivement en un point image et une électrode peuvent être déterminée.

6. Dispositif suivant la revendication 5,
dans lequel les électrodes de référence ont une structure en peigne, qui sont interdigitées avec des structures en peigne d'électrodes de référence voisines.
